# EUROPEAN PATENT SPECIFICATION

(11) **EP 1 721 144 B1**
(45) Date of publication and mention of the grant of the patent: **05.09.2007**
(21) Application number: 05708550.8
(22) Date of filing: 18.02.2005
(51) Int. Cl.: G01N 15/02

(54) **A METHOD FOR MEASURING PROPERTIES OF PARTICLES BY MEANS OF INTERFERENCE FRINGE ANALYSIS AND CORRESPONDING APPARATUS**
VERFAHREN ZUR MESSUNG VON TEILCHENEIGENSCHAFTEN MITTELS INTERFERENZSTREIFENANALYSE UND ENTSPRECHENDE VORRICHTUNG
PROCEDE PERMETTANT DE MESURER LES PROPRIETES DE PARTICULES PAR L'ANALYSE DE FRANGES D'INTERFERENCE, ET APPAREIL CORRESPONDANT

(30) Priority: 20.02.2004 IT TO20040100
(43) Date of publication of application: 15.11.2006
(73) Proprietor: UNIVERSITA' DEGLI STUDI DI MILANO, 20122 Milano (IT)
(72) Inventor: GIGLIO, Marzio, I-20129 Milano (IT); POTENZA, Marco, Alberto, Carlo, I-20135 Milano (IT)
(74) Representative: Vanzini, Christian
(86) International application number: PCT/IB2005/000411
(87) International publication number: WO 2005/083389

(56) References cited:
- WO-A-02/103332
- US-A- 5 327 217
- BROGIOLI DORIANO ET AL: "Heterodyne near-field scattering" APPLIED PHYSICS LETTERS, AMERICAN INSTITUTE OF PHYSICS. NEW YORK, US, vol. 81, no. 22, 25 November 2002 (2002-11-25), pages 4109-4111, XP012032611 ISSN: 0003-6951
- GLOVER A R ET AL: "INTERFEROMETRIC LASER IMAGING FOR DROPLET SIZING: A METHOD FOR DROPLET-SIZE MEASUREMENT IN SPARSE SPRAY SYSTEMS" APPLIED OPTICS, OPTICAL SOCIETY OF AMERICA,WASHINGTON, US, vol. 34, no. 36, 20 December 1995 (1995-12-20), pages 8409-8421, XP002937349 ISSN: 0003-6935

## Description

The present invention relates to a method of measuring properties of particles of the type described in the preamble to Claim 1.

For the determination of the properties of the particles, the method is based on a wave-scattering process.

Conventional light-scattering techniques for the determination of properties of particles or materials such as information on their size, shape, and structure are based on measurement of the distribution of the intensity of the radiation scattered around the direction of propagation of the beam which is incident on a sample. In general, information on the phase of the waves scattered is lost.

However, the phase of the scattered wave emerging from the centre of scattering contains valuable information. In fact, whilst for particles which are so small as to be negligible relative to the wavelength of the radiation a spherical wave in phase with the incident radiation is emitted, as the diameter of the particle increases, the wave has a phase difference which increases in dependence on the optical thickness of the particle and hence both on its diameter and on the refractive index. In most cases, and leaving out of consideration abnormal values for the ratio between the refractive indexes of the scattering element and the surrounding medium, most of the phase change takes place for diameters close to and typically less than the wavelength value. This range of diameters is usually poorly covered by conventional methods since the variation of the scattered intensity with the angle is slight, particularly if observations are limited to very small scattering angles, as is advantageous in order to keep the instrument compact. In fact, in conventional scattering techniques, information on the sizes of particles of this order of magnitude is obtained by sensors which detect the intensity scattered at very large angles relative to the direction of propagation of the incident beam. In this range of sizes, the scattered field depends on the third power of the linear dimension of the particle and the scattered power therefore depends on the sixth power of the linear dimension of the particle, making the detection of smaller particles very difficult.

In the past, various types of apparatus have been identified and produced which enable the phase difference between the wave transmitted by the sample and the wave scattered by the particles to be measured.

Finally, it is known that in-line or in-transmission holography techniques have been used to take measurements of particle sizes, particularly by the technique known as "synthetic holography". Synthetic holography enables the dimensions of the particles to be obtained by a calculation method based on the reconstruction of the image from the system of interference fringes recorded on a suitable sensor. To achieve a high resolution it is necessary to record a large number of interference fringes, in particular it is necessary to record the fringes which are spatially closest together, that is, which originate from the waves that are scattered at large angles (the angles are measured relative to the direction of incidence of the radiation) (H.J. Kreuzer and R.A. Pawlitzek, Europhysics News March/April 2003; F. Dubois, C. Minetti, O. Monnom, C. Yourassowsky, J.-C. Legros, and P. Kischel, Appl. Opt. 41, 4108-4119 (2002)).

The object of the present invention is to provide a method for the analysis and measurement of properties of particles by analysis of the interference between the wave transmitted by the sample and the wave scattered by the particles, which does not require for its implementation complex optical configurations or data generation and collection techniques.

This object is achieved, according to the invention, by a method of measuring properties of particles having the characteristics defined in the claims.

According to the invention, to obtain information on the size of the particles, the method considers an optical arrangement in which the scattered light interferes with the intense beam transmitted, which thus acts as a phase reference for the scattered wave (a self-reference system). In this condition, since the signal detected in the observation plane is given by the product of the amplitude of the intense field transmitted and the amplitude of the scattered field, the signal detected depends only on the third power of the linear dimension of the particle.

It is important to note that, although the optical arrangement is wholly analogous to that used in synthetic holography techniques, the method of the present invention is based on a different physical principle which enables additional information to be obtained, relative to that which is obtained from a hologram. Whereas synthetic holography techniques are affected by the resolution of the instrumentation which, as stated above, depends on the number of interference fringes recorded, the present invention is based on the fact that all of the information about the power of the radiation removed from the wave impinging on to the particle is contained in the wave which, once scattered, propagates in the direction of the incident wave, in accordance with what is stated by the so-called "Optical Theorem". This information is obtained, according to the present invention, by analysis of the position and of the configuration of a few interference fringes produced by the interference between the transmitted field and the scattered wave (generally less than 10-20 fringes), and at the limit of a single fringe, around the optical axis.

A further subject of the invention is apparatus for implementing a method of measuring properties of particles according to the invention.

A non-limiting embodiment of the invention will now be described with reference to the appended drawings in which:
Figure 1 is a basic diagram which illustrates the phenomenon of the scattering of a wave by a particle,
Figure 2 is a schematic view of an embodiment of apparatus for implementing a method of measurement according to the invention, and
Figure 3 is a schematic view of a variant of the apparatus of Figure 2.

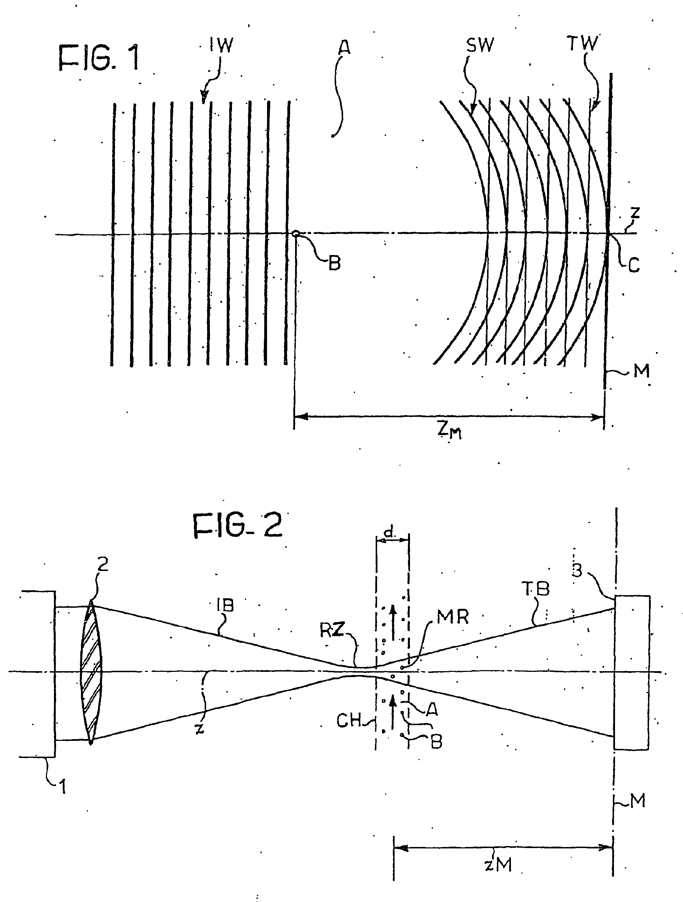

The method and the apparatus according to the present invention are based on the following physical principle which is described with reference to Figure 1.

An electromagnetic wave IW is considered (for simplicity, the wave is illustrated in Figure 1 as a plane wave); the wave is propagated in a medium A along an axis z and is incident on a particle B. The medium A and the particle B (which may be, for example, a bubble in a transparent, solid or liquid material) have refractive indices of n_{A} and n_{B}, respectively, at the frequency of the wave IW.

The particle B becomes the source of a spherical electromagnetic wave SW. If the particle is spherical and of negligible size relative to the wavelength of the wave IW, the emerging wave SW, which is known as the scattered wave, is in phase with the incident wave IW and therefore also with the transmitted fraction TW of that wave. In a detection plane M of a sensor disposed at a predetermined distance Z_{M} from the particle B, the interference between the scattered wave SW and the transmitted wave TW, the amplitude of which is much greater than that of the scattered wave SW, gives rise to a series of circular and concentric fringes the centre C of which lies on the projection of the position of the particle B in the plane M along the axis of propagation z of the radiation IW incident on the particle B. Since the two waves SW and TW are in phase, there is an interference maximum at the centre C of the system of fringes. The radii of these fringes are dictated by the wavelength of the radiation and by the distance Z_{M} between the particle B and the sensor plane M. If the particle is non-spherical, the shape of the interference fringes is not circular and enables information to be obtained on the shape of the particle.

The squared values of the radii of the fringes are directly proportional to the n^{th} order of the fringes. The proportionality constant is related to the distance between the particle B and the plane M and with the wavelength.

As the size of the particle B increases, the scattered wave SW has a phase lag which is related in a known way with the size and, very weakly, with the difference between the refractive indices n_{B} - n_{A}. As a consequence of this phase difference, at the centre C of the system of fringes, that is in the direction of the transmitted wave TW, the interference with the scattered wave causes a reduction in intensity.

Obviously, the phase lag also introduces a change in the radii of the interference fringes.

However, the linear relation described above is maintained and the constant of proportionality does not depend on the phase lag. The phase lag univocally determines the intercept at the origin, extrapolated for n = 0, which is known as the "central fractional order". If the phase lag is zero, the central fractional order is zero, that is, there is an intensity maximum. A measurement of the central fractional order therefore provides the phase lag and consequently the size of the particle B.

The configuration of the interference fringes can be advantageously analyzed also in such a way to provide the depth of intensity modulation of the interference pattern. This depth of modulation is determined by the ratio between the amplitude of the scattered field and the amplitude of the incident field. It also consequently contains information about the amount of radiation removed from the beam and therefore on the size of the particle.

If the incident radiation beam IB is a converging beam, a study of the fringes produced by the interference between the scattered wave SW and the transmitted beam TB again contains all of the information of the previous case. Some differences will be pointed out.

It is necessary to distinguish between the situation in which the particle or particles B occupy positions close to the focal plane (the plane of smallest diameter of the beam) or, on the contrary, are outside that region.

For particles far from the focal plane, the foregoing discussion remains substantially unchanged except for the fact that, in general, the fringes in a plane at a distance Z_{f} from the focus have larger diameters than for a plane wave. This is due to the fact that, in the plane of observation, the radii of curvature of the scattered wave SW and of the transmitted beam TB have smaller differences than in the case of a plane incident wave. Moreover, because the converging beam IB (which, for simplicity, is considered to be a beam with a Gaussian intensity profile) has a finite diameter in the plane at distance z_{f}, the number of fringes may be reduced. Apart from these unimportant limitations, quantitative information about the optical thickness (and hence on the diameter and on the refractive index) of the particles and about their positions can be obtained from the measurement of the central fractional order and from the depth of the intensity modulations of the interference pattern.

A separate case is constituted by positions of the particles in the region around the focus which, in the case of a Gaussian beam, is defined by the so-called Rayleigh range. For particles in these positions, the phase is between the scattered field and the spherical transmitted wave becomes very small and, in the limit of a particle positioned precisely in the plane of smallest diameter of the beam and on the optical axis z, the degenerate case exists in which the scattered wave and the transmitted beam have surfaces of constant phase that are coincident. In this case there is absolutely no intensity modulation due to interference throughout the field As will be shown, this apparently adverse situation is the most suitable for certain applications since, if the particle B is displaced perpendicularly to the optical axis z along the diameter of the beam in the focal plane, the intensity distribution changes because of the interference between the transmitted wave TW and the scattered wave SW which, in this situation, form a slight angle and produce variations of intensity in large portions of the transmitted beam TB. This configuration permits the use of so-called quadrant sensors which, by operating in a differential manner, permit great sensitivity.

For particles in the focal region, it is also important that in that region the effect of the so-called "phase anomaly" is to be considered; this describes the anomalous phase shift of the incident field in that region. The entire phase shift along the optical axis z amounts to π. The difference between the phases of the spherical wave SW scattered by a particle disposed at the focus and the transmitted beam TB therefore amounts to π/2, that is, the phase of the scattered wave SW is precisely in quadrature with the transmitted beam. As a result, the interference does not change the power of the transmitted field and the total scattering cross-section of the radiation by the particle is zero, in accordance with the theory in the case of infinitely small particles. If the particle is displaced transversely relative to the optical axis z, a weakening and an increase in intensity in the transmitted beam TB are created within two opposite lobes disposed along the direction of the displacement of the particle.

If the dimension of the particle B increases, the phase lag between the scattered wave SW and the incident beam IB increases, reaching the maximum value of π and the two waves are then in phase opposition. In this case, if the particle B is displaced transversely relative to the beam IB, the interference between the scattered wave SW and the transmitted wave TW weakens the whole transmitted beam TB, no longer producing the weakening and the increase in intensity on opposite sides as in the previous case. In this case, the interference creates a slight, almost entirely symmetrical shadow over the entire beam. There is nevertheless a weak asymmetry in the distribution of the power removed, because of the displacement of the particle B relative to the optical axis z.

A schematic example of a possible embodiment of the apparatus with which measurements on particles can be taken in accordance with the present invention is shown in Figure 2. The apparatus comprises an electromagnetic radiation source 1 suitable for producing a beam of radiation IB which has a range of frequencies centred about a predetermined frequency ω, corresponding to a wavelength of λ in a vacuum. Downstream of the source 1 along the propagation axis z of the beam, there are optionally a spatial filter (not shown) and beam shaping optics 2.

The source 1 preferably emits visible or infra-red light and is constituted, for example, by a light-emitting diode or by a semiconductor laser or a laser of another type, according to measurement requirements. In general, the use of sources of radiation with a band that is not too narrow appreciably reduces effects due to spurious or multiple interference. For some applications, the source may advantageously emit radiation distributed around several wavelength values (an arrangement known as a "multi-coloured source").

The particles to be analyzed may be composed of any solid or fluid substance, material or element (aerosol, drops, bubbles). The particles may be arranged in a stationary manner or may move within the medium A. The medium A may be solid or fluid but in any case must be transparent to the frequency/ies of the incident radiation used. Moreover, the density of the particles in the medium A (the number of particles per unit of volume) must transmit at least part of the incident wave IW.

In other words, the density of the particles within the measurement volume must be quite low so that all of the fringe systems can be detected with good definition. In these conditions the intensity of the transmitted beam is certain to be practically unchanged.

For particles B which are dispersed in a fluid medium A, a suitable conventional method of confinement ensures that only one particle at a time is present in an observation region MR struck by the beam IB. As is shown in Figure 2, the confinement is achieved, for example, by means of a duct CH which has walls that are transparent to the radiation of the beam IB and which conveys the medium A in which the particles B are dispersed through the observation region MR. In Figure 2, the incident beam IB is shown as a focused laser beam. The observation region MR through which the particles B are conveyed has a width d along the axis z of the beam IB which is thin enough to allow a single particle B at a time (or at most a few particles) to pass through the region MR. For reasons concerning the amplitude of the signals, it is advantageous to focus the beam in a manner such that the particles pass through the beam close to the focus in such a way that the intensity of the field incident on the particles is suitably high. As is known, close to the focal plane a wave in fact exhibits the "phase anomaly" phenomenon and, to simplify data analysis, it is preferable for the particles to be used in regions outside the so-called Rayleigh range so that phase anomaly effects are minimized. As described above, a particle disposed at the focus (in the plane of smallest diameter of the beam) and on the optical axis z of the system emits a spherical wave perfectly co-phasal with the incident beam and interference fringes are therefore not observed. This type of geometry is used in apparatus developed in the past for the measurement of the phase difference between the scattered wave and the incident wave (see patent No. US-A-5 037 202 and J. Batchelder and M. Taubenblatt, Appl. Opt. 30, 4972-4979 (1991)). In these conditions, however, the particles necessarily have to pass through the exploring beam in the plane of smallest diameter and in a diametral direction (that is, passing through the centre). For this purpose, so-called signal "validation schemes" are necessary; these indicate which signals are produced by the passage of the particle in the diametral direction and therefore provide the correct value for the phase difference. Although, on the one hand, this arrangement permits the use of simple sensors (with a single sensitive element and without any determination of the intensity distribution in the observation plane), on the other hand, it requires complex optical systems such as, for example, a Nomarski system and the use of Wollastone polarizing prisms, with limited sampling and data collection frequency.

If the particles are caused to pass through the region of smallest diameter of the beam (not shown), a variant of the present invention advantageously enables the information relating to the dimensions of single particles to be obtained and the position of transit through the beam to be determined by means of apparatus which is simpler than the types of apparatus developed in the past and mentioned above.

This result is achieved on the basis of an analysis of a plurality of intensity values measured by suitable sensitive elements as stated above . When the particle passes close to the plane of smallest diameter of the beam, perpendicularly to the propagation direction z, the distribution of intensity has variations due to the interference between the transmitted beam TB and the scattered beam SW. The size of the regions in which the intensity variations occur is very large in this case and therefore permits the use of sensors having sensitive elements of large area which therefore receive a large fraction of the power scattered by the particle Moreover, if the particle does not pass through the beam along the diameter the consequent asymmetry of the interference pattern provides a method of determining the transit position.

Another embodiment (not shown) of the present invention is constituted by apparatus in which the light beam IB is substantially collimated and is directed through the sample constituted by the particles B. In this case, it may be preferable to use means suitable for magnifying the image of the interference fringes obtained in a suitably selected observation plane M. These means may be represented by optical elements.

A device 3 for collecting and recording the radiation coming from the observation region MR is aligned on the propagation direction z of the radiation IB, that is, on the optical axis of the system. The radiation detected comprises scattered radiation produced by the scattering interaction of the incident radiation IB with the particles B in accordance with the principle described above and a portion TB formed by a fraction of the incident beam IB which is transmitted undisturbed through the observation region MR. The device 3 is formed by a plurality of sensor elements which can detect a plurality of electromagnetic radiation intensity values, and which are disposed in the plane M. Preferably, the sensor elements of the device 3 are arranged in a manner such as to form a rectangular matrix of sensor elements each of which can detect an electromagnetic radiation intensity value at a distinct point. Even more preferably, the device 3 comprises a CCD sensor or a CMOS or NMOS sensor. The device 3 can thus detect the interference fringes produced, in accordance with the principle described above, by the interference of the radiation scattered by the particles B with the transmitted beam TB at the distance Z_{M} of the device 3 from the particle B. Means (not shown) for obtaining, in the device 3, a suitable distribution of the radiation connected with the interference fringes are optionally interposed between the particle to be analyzed and the sensor device 3. These means may be constituted, for example by an optical system.

The sensitive elements of the sensor device 3 detect a plurality of radiation intensity values, one for each of the sensitive elements, and supply corresponding signals to a processing unit (not shown).

The processing unit is programmed to determine the dimensions and optionally the shape of the particles by analysis of the lower-order fringes defined by the measured radiation intensity values. An example of a method of processing the data collected in a measurement performed by apparatus as described above or in another foreseeable embodiment consists of the following steps:
a) recording, at a fixed distance Z_{M} from the region MR, an intensity distribution I(x,y) which, in the presence of a particle in the beam, provides the fringes due to the interference between the scattered wave and the transmitted wave (x and y are the coordinates of the points in the detection plane M of the sensor 3);
b) recording a suitable sample of intensity distributions Iᵢ (x, y) to obtain an intensity distribution I₀(x, y) which is a good representation of the intensity distribution in the absence of the particle;
c) processing the data thus obtained to obtain a distribution J(x,y)=(I(x,y)-I₀(x,y))/I₀(x,y) which provides the interference fringes with good contrast, normalized for the intensity incident on the particle;
d) processing the data relating to the intensity distribution J (x,y) for the characterization of the interference fringe configuration in terms of the radius values and shape;
e) processing the data relating to the configuration of the interference fringes to determine the fractional order at the centre and, from the measurement of the depth of modulation, the scattered amplitude and hence the dimension and the shape of the particle.

In the example described above, the functions I(x,y) and J(x,y) are representative of the interference fringes, whereas I₀(x,y) represents the intensity of the beam transmitted in the absence of particles.

A variant of the measurement method according to the present invention may advantageously be implemented, for example, when the particles pass through the focal region of the beam, by means of a sensor device 3 the sensitive elements of which detect a plurality of radiation intensity values as a function of time during the transit of the particle through the beam, one value for each of the sensitive elements, and supply corresponding signals to a processing unit (not shown). These sensor elements of the device 3 may be represented, for example, by photodiodes. A preferred embodiment is represented by so-called quadrant photodiodes. As discussed above, since the particles pass through the focal region of the beam, the intensity modulations are extended over appreciable fractions of the beam so the sensitive elements can profit from a very extensive area such that they detect a large fraction of the power scattered by the particles. This aspect is particularly advantageous for the purposes of the present invention since the measurement uncertainties related to the so-called "shot noise" are thus reduced and therefore permit the measurement of particles of sizes much,smaller than the wavelength. The sensor elements of the device 3 are arranged in a manner such as to measure the temporal profile of the intensity in suitable fractions of the beam transmitted upon the passage of a particle B through the incident beam IB. Even more preferably, the sensor elements may be arranged in a manner such as to select the particles which are passing through the centre of the incident beam IB by analysis of the asymmetry of the signal (that is, so as to measure solely the fringes of the particles which are passing through the centre, or even better, to determine substantially the position of transit of the particle through the beam). The temporal profiles of the intensities measured by the individual sensor elements of the device 3 provides: 1) information on the depth of modulation of the interference pattern and 2) the phase difference between the scattered, wave and the transmitted wave. This information enables to determine the optical thickness of the particle and hence the size and refractive index on the basis of the present invention.

The sensitive elements of the sensor device 3 detect a plurality of radiation intensity values, one for each of the sensitive elements, and provide corresponding signals to a processing unit (not shown).

The processing unit is programmed to determine the dimensions of the particles by analysis of the time dependence of the amplitude of the signals or of suitable combinations thereof. A non-limiting example of a method of processing the data collected in a measurement performed by apparatus as described above or with another foreseeable embodiment consists of the following steps:
k) recording a plurality of radiation intensity values at a suitable distance z_{M} from the sample. For example, four values which are provided by a quadrant photodiode and which will be indicated 1, 2, 3, 4 (following the convention on the anticlockwise order of the quadrants in the plane starting from the top right-hand quadrant, and assuming that the particle passes through the beam from the top towards the bottom);
l) recording a set of such intensity values as a function of time so as to determine the variation of those values as a function of time in each of the sensitive elements;
m) analysis of the signals collected in order to determine the position of transit through the beam in the plane perpendicular to the optical axis (for example, by the difference of the signals from the sensitive elements that are disposed on opposite sides of the direction of transit of the particle, that is 2 + 3 - 1 + 4). Consequent selection of the particles the signals of which are to be analyzed, or optionally of the most suitable analysis method;
n) analysis of the signals collected to determine the position of transit through the beam in the longitudinal direction (for example, on the basis of analysis of the time dependence of the difference values and of the sum values of the impulses coming from suitable sensitive elements, that is, 1 + 2, 3 + 4). Consequent selection of the particles the signals of which are to be analyzed;
o) analysis of the signals collected to determine the depth of modulation due to the interference between scattered wave and transmitted wave. For example, by means of the time dependence of the difference of the values recorded by the sensitive elements during the transit of the particle (1 + 2 - 3 + 4);
p) analysis of the signals collected to determine the time dependence of the sum of the values recorded by the sensitive elements in the absence of the particle and during the transit. For example, 1 + 2 + 3 + 4. Comparison with the corresponding value obtained in the absence of the particle in the beam and determination of the power removed;
q) determination of the particle dimensions. Determination of other properties that can be obtained by the method in accordance with foreseeable procedures (for example, refractive index).

A further variant of the measurement method according to the present invention may advantageously be used when more than one particle are present simultaneously in the observation region MR struck by the beam IB so as to produce more than one system of interference fringes in the plane M in which the radiation intensity is recorded. In this case, the apparatus consists of embodiments in which the sample to be analyzed lies outside the Rayleigh region of the beam, or those in which the incident beam is substantially collimated. The method is identical to the preceding one in steps a) to c) and subsequently consists of the following steps:
d') processing the data obtained in order to perform an identification, by a suitable image analysis procedure, of the centres Cᵢ of the fringe systems (i is a whole number which identifies the i^{th} fringe system).

The data relating to the configurations of the interference fringes can then be processed, for example, in accordance with steps d) and e) of the method described above.

Another variant of the measurement method according to the present invention relates to the more complex situation in which a large number of particles is simultaneously present in the observation, region MR, in which the beam has a large cross-section accordingly to what will be explained further below. In this situation, in a plane M disposed at a fixed distance Z_{M} from the observation region MR, the intensity distribution appears very complex since it is the sum of many interference-fringe systems produced by the individual particles. The signal has all of the characteristics of noise and is comparable to a so-called speckle field. A large beam therefore means a beam substantially larger than the typical dimension of the first fringes of the interference patterns. In this case the optical configuration may be modified suitably, for example, by illuminating the sample with a collimated radiation beam and recording the superimposition of the interference fringes downstream of the sample, at a suitably selected fixed distance Z_{M}. In the case of a collimated beam, this distance will therefore have to be such that the relationship Z_{M} > a² /λ is satisfied, where λ is a characteristic value for the wavelength of the radiation used and a is a dimension which is characteristic of the particles contained in the observation region (MR), so that each sensor element receives the radiation scattered by a large number of particles so as to permit processing of the data by statistical analysis of the measurements.

In this case it is not possible to extract an individual fringe system from the extremely complex superimposition of fringe systems positioned randomly in the plane M. However, it is possible to use a statistical method based on the calculation of the power spectrum of the intensity distributions recorded. This gives a function which is one-to-one related to the intensity distribution of the interference fringes of a single particle and the information on the phase differences can be recovered. For example, for very small particles, the power spectrum becomes the transfer function of the optical technique known as the Shadowgraph technique, which exhibits a low minimum at zero for the scattering wave vector value q = 2 π / λ sin (θ/2), where θ represents the angle formed between the direction of the scattered radiation and the direction of the incident radiation. As soon as the diameters of the particles become larger, the intensity minimum at q = 0 is gradually transformed into a peak, enabling the measurement of the fractional order at the centre of the system of fringes produced by each individual particle to be deduced.

In this case, an example of a method of processing of the data collected consists of the data analysis method commonly used for quantitative Shadowgraph measurements, an example of which is represented by the following steps:
a'') recording a number N of intensity distributions Iᵢ(x,y) in the presence of particles in the beam,
b") processing the data relating to the N intensity distributions Iᵢ(x,y) to obtain an intensity distribution I₀(x,y) which is a good representation of the static intensity distribution due to the transmitted beam in the absence of the signal due to the particles;
c'') processing the data obtained to obtain a distribution Jᵢ (x, y) = (Iᵢ (x, y) -I₀ (x, y)) /I₀ (x, y) which provides the superimposition of the interference fringes with good contrast;
d") processing the data relating to the distributions Jᵢ(x, y) to obtain two-dimensional power spectra Jᵢ(qₓ, q_{y});
e'') processing the data obtained in step d") by averaging the two-dimensional power spectra to obtain a two-dimensional power spectrum J(qₓ, q_{y}) ;
f'') processing the data relating to the two-dimensional power spectrum J(qₓ,q_{y}) to obtain, since the distance z_{M} and the geometry of the apparatus are known, the central fractional order of the interference fringes the superimposition of which determines the intensity distributions recorded, Iᵢ(x,y), and
g") processing the data related to the central fractional order to obtain the particle size by known methods.

In this case, the intensity distributions Iᵢ (x,y) represent complex superimpositions of numerous interference fringes which are comparable to speckle fields.

The foregoing indicates that the present invention can fruitfully be utilized to widen the field of use of the recently proposed technique called the Near Field Scattering Technique, which is described in International patent application WO 02/103332.

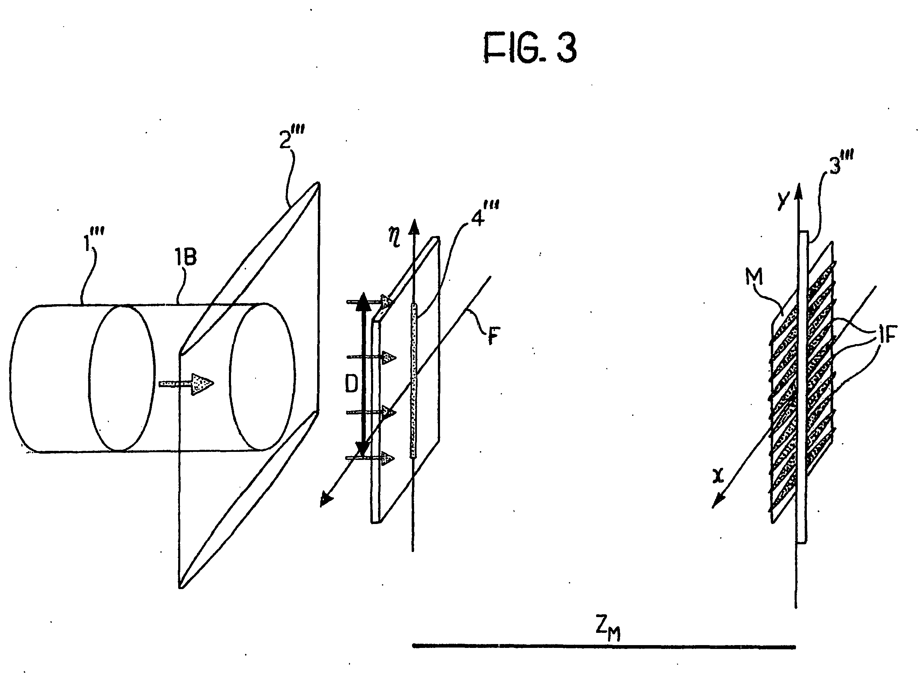

Another variant of the apparatus for implementing the method according to the invention is shown schematically in Figure 3. It comprises an electromagnetic radiation source 1'" as described for the previous embodiments, after which are present beam shaping optics 2' ' ' comprising a cylindrical lens which forms in its focal plane η a thin blade of radiation 4''' of width D. The fringes IF produced in the detection plane M by the interference between the radiation transmitted and that which is scattered are thus highly deformed. Single-dimensional analysis of the interference fringes thus obtained can be performed in the plane η in which the thin beam of radiation 4' ' ' lies to obtain the information relating to the central fractional order of each system of fringes produced by particles struck by the thin beam of radiation 4"'. Moreover, since the information is one-dimensional, a one-dimensionally arranged system of sensors 3''' can be used, rather than a rectangular matrix system. This embodiment is particularly advantageous for the measurement of particles that are immersed in a flowing fluid which can be caused to flow perpendicularly relative to the thin beam of radiation 4"', in the direction of the arrow F. The data collected can thus be analyzed as described in the method examples given above.

The methods described above, as well as other possible embodiments of the present invention, may require a large number of acquisitions, for example, to be able to reduce the noise which inevitably affects the measurement and thus to obtain an adequate determination of the properties of the particles under examination.

The invention is not intended to be limited to the embodiments described and illustrated herein which should be considered as examples of the implementation of the method and of the apparatus for the measurement of properties of particles; rather, within the scope of the claims, the invention may undergo modifications relating to the shape, construction and arrangement of parts, constructional details, and data-acquisition and data-analysis methods.

Moreover, the invention is not necessarily limited to the measurement of properties of solid particles in a fluid medium but may be used for the measurement of the properties of materials which can be deduced by measurement of the phase difference between the scattered waves and the transmitted wave as described above, in accordance with possible variants which will seem appropriate to persons skilled in the art and which fall within the scope of the invention as defined in the appended claims.

## Claims

1. A method of measuring properties of particles, comprising the steps of:
generating a beam of radiation (IB) which is propagated along a principal direction (z),
illuminating with the beam (IB) an observation region (MR) which is occupied or transited by a plurality of particles (B), a portion of the beam (IB) giving rise to radiation (SW) which is scattered by scattering interaction of that portion of the beam (IB) with the particles (B), and another portion (TB) being transmitted substantially undisturbed along the principal axis (z) through the observation region (MR), and
detecting, in a plane (M) disposed on the propagation direction (z), a plurality of radiation intensity values which are determined by the interference between the scattered radiation (SW) and the transmitted radiation (TB),
**characterized in that** it further comprises the steps of:
identifying systems of interference fringes associated respectively with the individual particles (B) in which the interference pattern is affected by a phase lag of the scattered radiation (SW) relative to the transmitted radiation (TB), the lag being determined by the interaction of the radiation beam (IB) with the particles (B), and
determining the properties of the particles (B) on the basis of the fringes that are affected by the phase lag.

2. A method according to Claim 1 in which the identification of the interference fringe systems comprises a determination of the central fractional order relative to the individual fringe systems.

3. A method according to Claim 1 or Claim 2 in which the identification of the interference fringe systems comprises a determination of the depth of intensity modulation relative to the individual fringe systems.

4. A method according to any one of Claims 1 to 3 in which the radiation beam (IB) has a plane wave front.

5. A method according to Claim 4 in which the detection plane (M) is disposed at a predetermined distance Z_{M} from the observation region (MR) such that the relationship z_{M} > a² / λ is valid, where λ is a characteristic value for the wavelength of the radiation used and a is dimension which is characteristic of the particles contained in the observation region (MR).

6. A method according to any one of Claims 1 to 3 in which the radiation beam (IB) is focused close to the observation region (MR).

7. A method according to Claim 6 in which the position of the observation region (MR) is selected so as to be outside the Rayleigh zone (RZ) close to the position of smallest diameter of the beam (IB).

8. A method according to any one of Claims 1 to 3 in which the radiation is focused by means of a cylindrical lens (2"') so as to form a thin sheet of light (4"') which illuminates the observation region (MR) substantially one-dimensionally.

9. A method according to any one of the preceding claims in which the illumination and the detection are performed from opposite sides of the observation region (MR).

10. A method according to any one of the preceding claims, arranged so as to determine the fractional order at the centre of the system of interference fringes produced by a single particle at a time.

11. A method according to any one of the preceding claims in which the detection of the plurality of radiation intensity values determined by the interference between the scattered radiation (SW) and the transmitted radiation (TB) comprises a measurement of the variation of the intensity values over time upon the passage of a particle (B) through the incident beam (IB),
the determination of the properties of the particle (B) being based on the temporal change of the fringes that are affected by the phase lag.

12. A method according to Claim 11 in which the determination of the properties of the particles (B) presupposes the determination of the position of transit of the particle (B) through the incident beam (IB) by analysis of the asymmetry of the temporal profile of the measured intensity values.

13. A method according to Claim 11 in which the measurement of the temporal profile of the measured intensity values takes place by selection of the zone of transit of the particles (B).

14. A method according to any one of Claims 1 to 9 in which the determination of the interference fringe systems associated respectively with the particles (B) comprises a determination of the centres (Cₖ) of a plurality of interference fringe systems produced by a corresponding plurality of particles (B).

15. A method according to Claim 14 in which the determination of the interference fringe systems associated respectively with the particles (B) comprises a determination of a power spectrum of the electric field corresponding to the plurality of radiation intensity values.

16. A method according to any one of the preceding claims in which the determination of the properties of the particles (B) on the basis of the lower-order fringes of the system of fringes is programmed in a manner such as to determine the distribution of the dimensions of the particles (B).

17. Apparatus arranged for implementing a measurement method according to Claim 1, comprising:
a source (1; 1''') of the radiation beam (IB), suitable for illuminating the observation region (MR),
sensor means (3; 3"') suitable for detecting the radiation at a plurality of points simultaneously and for providing a signal indicative of the detection, the sensors being disposed on the propagation axis (z) in such a way to detect a plurality of radiation intensity values which are determined by the interference between the scattered radiation (SW) and the transmitted radiation (TB), in which the interference is affected by a phase lag of the scattered radiation (SW) relative to the transmitted radiation (TB), the lag being determined by the interaction of the radiation beam (IB) with the particles (B), and
processing means which are programmed to determine, on the basis of the signal, interference fringe systems associated respectively with the individual particles (B), and to determine the properties of the particles (B) on the basis of the fringes which are affected by the phase lag.

18. Apparatus according to Claim 17, further comprising lens means interposed between the observation region (MR) and the sensor means (3; 3"') so as to permit indirect detection by detection of the plurality of intensity values in an optically conjugate plane.

19. Apparatus according to Claim 17 or Claim 18, further comprising a system (2"') for shaping the wave front, based on cylindrical optics such as to form a thin sheet of radiation (4"') for the illumination of the observation region (MR).

20. Apparatus according to Claim 17 or Claim 18, further comprising a system (2) for shaping the wave front, suitable for focusing the radiation in the vicinity of the observation region (MR).

21. Apparatus according to Claim 17 to 18, further comprising a system for shaping the wave front, suitable for collimating the radiation that is incident on the observation region (MR).

22. Apparatus according to any one of Claims 17 to 21 in which the sensor means (3; 3"') comprise a CCD, NMOS or CMOS sensor.

23. Apparatus according to any one of Claims 17 to 21 in which the sensor means (3; 3''') comprise a plurality of photodiodes arranged in manner such as to detect, as a function of time, the intensity distribution produced by the interference between transmitted radiation (TB) and scattered radiation (SW).

24. Apparatus according to Claim 23 in which the photodiodes are arranged in a manner such as to collect selectively radiation coming from predetermined zones of transit of the particles (B).

25. Apparatus according to any one of Claims 17 to 24 in which the source (1; 1"') is a multi-coloured source.

## Patentansprüche

1. Verfahren zum Messen von Partikeleigenschaften, umfassend die folgenden Schritte:
das Erzeugen eines Strahlenbündels (IB), das entlang einer Hauptrichtung (z) verbreitet wird,
das Beleuchten eines Beobachtungsbereichs (MR), der von einer Mehrzahl von Partikeln (B) eingenommen oder durchquert wird, mit dem Strahl (IB), wobei ein Teil des Strahls (IB) eine Strahlung (SW) verursacht, die durch eine Streuwechselwirkung jenes Teils des Strahls (IB) mit den Partikeln (B) gestreut wird, und wobei ein weiterer Teil (TB) entlang der Hauptachse (z) durch den Beobachtungsbereich (MR) im Wesentlichen ungestört übertragen wird, und
das Ermitteln einer Mehrzahl von Strahlungsintensitätswerten, die durch die Interferenz zwischen der gestreuten Strahlung (SW) und der übertragenen Strahlung (TB) bestimmt werden, und zwar auf einer in der Ausbreitungsrichtung (z) angeordneten Ebene (M),
**dadurch gekennzeichnet, dass** es weiters die folgenden Schritte umfasst:
das Erkennen von den einzelnen Partikeln (B) jeweils zugeordneten Systemen von Interferenzstreifen, in denen das Interferenzbild von einer Phasenverzögerung der gestreuten Strahlung (SW) in Bezug auf die übertragene Strahlung (TB) betroffen ist, wobei die Verzögerung durch die Wechselwirkung des Strahlenbündels (IB) mit den Partikeln (B) bestimmt wird, und
das Bestimmen der Eigenschaften der Partikel (B) anhand der von der Phasenverzögerung betroffenen Streifen.

2. Verfahren gemäß Anspruch 1, wobei die Erkennung der Interferenzstreifensysteme eine Bestimmung der zentralen gebrochenen Ordnung bezüglich der einzelnen Streifensysteme umfasst.

3. Verfahren gemäß Anspruch 1 oder Anspruch 2, wobei die Erkennung der Interferenzstreifensysteme eine Bestimmung der Tiefe der Intensitätsmodulation bezüglich der einzelnen Streifensysteme umfasst.

4. Verfahren gemäß einem der Ansprüche 1 bis 3, wobei das Strahlenbündel (IB) eine ebene Wellenfront hat.

5. Verfahren gemäß Anspruch 4, wobei die Detektionsebene (M) in einem vorbestimmten Abstand Z_{M} vom Beobachtungsbereich (MR) angeordnet ist, so dass die Beziehung Z_{M} > a² / λ Gültigkeit hat, wobei λ ein Kennwert für die Wellenlänge der eingesetzten Strahlung und a eine Abmessung ist, welche für die im Beobachtungsbereich (MR) enthaltenen Partikel charakteristisch ist.

6. Verfahren gemäß einem der Ansprüche 1 bis 3, wobei das Strahlenbündel (IB) nahe dem Beobachtungsbereich (MR) fokussiert ist.

7. Verfahren gemäß Anspruch 6, wobei die Position des Beobachtungsbereichs (MR) so gewählt wird, um außerhalb der Rayleigh-Zone (RZ) nahe der Position des kleinsten Durchmessers des Strahls (IB) zu liegen.

8. Verfahren gemäß einem der Ansprüche 1 bis 3, wobei die Strahlung mittels einer Zylinderlinse (2"') fokussiert wird, um eine dünne Lichtschicht (4"') zu bilden, welche den Beobachtungsbereich (MR) im Wesentlichen eindimensional beleuchtet.

9. Verfahren gemäß einem der vorhergehenden Ansprüche, wobei das Beleuchten und das Ermitteln von entgegengesetzten Seiten des Beobachtungsbereichs (MR) erfolgen.

10. Verfahren gemäß einem der vorhergehenden Ansprüche, welches dazu eingerichtet ist, die gebrochene Ordnung im Zentrum des Systems von Interferenzstreifen, das jeweils von einem einzelnen Partikel erzeugt wird, zu bestimmen.

11. Verfahren gemäß einem der vorhergehenden Ansprüche, wobei das Ermitteln der Mehrzahl von Strahlungsintensitätswerten, die durch die Interferenz zwischen der gestreuten Strahlung (SW) und der übertragenen Strahlung (TB) bestimmt werden, eine Messung der Veränderung der Intensitätswerte im Zeitablauf beim Durchtritt eines Partikels (B) durch den einfallenden Strahl (IB) umfasst,
wobei die Bestimmung der Eigenschaften des Partikels (B) auf der zeitlichen Veränderung der von der Phasenverzögerung betroffenen Streifen beruht.

12. Verfahren gemäß Anspruch 11, wobei die Bestimmung der Eigenschaften der Partikel (B) die Bestimmung der Durchtrittsposition des Partikels (B) durch den einfallenden Strahl (IB) mittels einer Analyse der Asymmetrie des zeitlichen Profils der gemessenen Intensitätswerte voraussetzt.

13. Verfahren gemäß Anspruch 11, wobei die Messung des zeitlichen Profils der gemessenen Intensitätswerte durch Auswahl des Durchtrittsbereichs der Partikel (B) erfolgt.

14. Verfahren gemäß einem der Ansprüche 1 bis 9, wobei die Bestimmung der den Partikeln (B) jeweils zugeordneten Interferenzstreifensysteme eine Bestimmung der Zentren (Cₖ) einer Mehrzahl von Interferenzstreifensystemen, die von einer entsprechenden Mehrzahl von Partikeln (B) erzeugt wurden, umfasst.

15. Verfahren gemäß Anspruch 14, wobei die Bestimmung der den Partikeln (B) jeweils zugeordneten Interferenzstreifensysteme eine Bestimmung eines Energiespektrums des elektrischen Felds, das mit der Mehrzahl von Strahlungsintensitätswerten übereinstimmt, umfasst.

16. Verfahren gemäß einem der vorhergehenden Ansprüche, wobei die Bestimmung der Eigenschaften der Partikel (B) anhand der zu einer niedrigeren Ordnung gehörigen Streifen des Streifensystems solcherart programmiert ist, um die Verteilung der Abmessungen der Partikel (B) zu bestimmen.

17. Apparat, welcher zur Durchführung eines Messverfahrens gemäß Anspruch 1 eingerichtet ist, umfassend:
eine Quelle (1; 1 "') des Strahlenbündels (IB), welche zum Beleuchten des Beobachtungsbereichs (MR) geeignet ist,
Sensormittel (3; 3'''), die zum gleichzeitigen Nachweis der Strahlung an einer Mehrzahl von Punkten und zum Bereitstellen eines den Nachweis anzeigenden Signals geeignet sind, wobei die Sensoren an der Ausbreitungsachse (z) solcherart angeordnet sind, um eine Mehrzahl von Strahlungsintensitätswerten, die durch die Interferenz zwischen der gestreuten Strahlung (SW) und der übertragenen Strahlung (TB) bestimmt werden, zu ermitteln, wobei die Interferenz von einer Phasenverzögerung der gestreuten Strahlung (SW) in Bezug auf die übertragene Strahlung (TB) betroffen ist und die Verzögerung durch die Wechselwirkung des Strahlenbündels (IB) mit den Partikeln (B) bestimmt wird, und
Verarbeitungsmittel, welche dazu programmiert sind, anhand des Signals den einzelnen Partikeln (B) jeweils zugeordnete Interferenzstreifensysteme zu bestimmen und anhand der von der Phasenverzögerung betroffenen Streifen die Eigenschaften der Partikel (B) zu bestimmen.

18. Apparat gemäß Anspruch 17, welcher weiters Linsenmittel umfasst, die zwischen dem Beobachtungsbereich (MR) und den Sensormitteln (3; 3'") eingefügt sind, um einen indirekten Nachweis durch Ermittlung der Mehrzahl von Intensitätswerten in einer optisch konjugierten Ebene zu ermöglichen.

19. Apparat gemäß Anspruch 17 oder Anspruch 18, welcher weiters ein System (2"') zum Bilden der Wellenfront basierend auf einer Zylinderoptik umfasst, um eine dünne Strahlungsschicht (4"') für die Beleuchtung des Beobachtungsbereichs (MR) zu bilden.

20. Apparat gemäß Anspruch 17 oder Anspruch 18, welcher weiters ein System (2) zum Bilden der Wellenfront umfasst, das zum Fokussieren der Strahlung in der Nähe des Beobachtungsbereichs (MR) geeignet ist.

21. Apparat gemäß Anspruch 17 bis 18, welcher weiters ein System zum Bilden der Wellenfront umfasst, das zum Kollimieren der auf den Beobachtungsbereich (MR) fallenden Strahlung geeignet ist.

22. Apparat gemäß einem der Ansprüche 17 bis 21, wobei die Sensormittel (3; 3"') einen CCD-, NMOS- oder CMOS-Sensor umfassen.

23. Apparat gemäß einem der Ansprüche 17 bis 21, wobei die Sensormittel (3; 3"') eine Mehrzahl von Photodioden umfassen, die solcherart angeordnet sind, um die von der Interferenz zwischen übertragener Strahlung (TB) und gestreuter Strahlung (SW) erzeugte Intensitätsverteilung als Funktion der Zeit zu ermitteln.

24. Apparat gemäß Anspruch 23, wobei die Photodioden solcherart angeordnet sind, um eine aus vorbestimmten Durchtrittsbereichen der Partikel (B) kommende Strahlung selektiv zu sammeln.

25. Apparat gemäß einem der Ansprüche 17 bis 24, wobei die Quelle (1; 1''') eine mehrfarbige Quelle ist.

## Revendications

1. Procédé de mesure des propriétés de particules, comprenant les étapes consistant à :
produire un faisceau de rayonnement (IB) qui se propage le long d'une direction principale (z),
éclairer avec le faisceau (IB) une région d'observation (MR) qui est occupée par ou dans laquelle transite une pluralité de particules (B), une partie de faisceau (IB) donnant naissance à un rayonnement (SW) qui est diffusé par l'interaction diffusante de la partie du faisceau (IB) comportant les particules (B), et une autre partie (TB) étant transmise substantiellement non perturbée le long de l'axe principal (z) à travers la région d'observation (MR), et
détecter, dans un plan (M) disposé sur la direction de propagation (z), une pluralité de valeurs d'intensités de rayonnement qui sont déterminées par l'interférence entre le rayonnement diffusé (SW) et le rayonnement transmis (TB),
**caractérisé en ce qu'**il comprend en outre les étapes consistant à :
identifier des systèmes de franges d'interférence associés respectivement aux particules individuelles (B) dans lesquels le dessin d'interférence est touché par un retard de phase du rayonnement diffusé (SW) par rapport au rayonnement transmis (TB), le retard étant déterminé par l'interaction du faisceau de rayonnement (IB) avec les particules (B), et
déterminer les propriétés des particules (B) d'après les franges qui sont touchées par le retard de phase.

2. Procédé selon la revendication 1, dans lequel l'identification des systèmes de franges d'interférence comprend une détermination de l'ordre fractionnaire central par rapport aux systèmes de franges individuels.

3. Procédé selon la revendication 1 ou 2, dans lequel l'identification des systèmes de franges d'interférence comprend une détermination de la profondeur de la modulation d'intensité par rapport aux systèmes de franges individuels.

4. Procédé selon l'une quelconque des revendications 1 à 3, dans lequel le faisceau de rayonnement (IB) a un front d'onde plan.

5. Procédé selon la revendication 4, dans lequel le plan de détection (M) est placé à une distance prédéterminée Z_{M} de la région d'observation (MR) de sorte que la relation Z_{M} > a² / λ est vérifiée, où λ est une valeur caractéristique pour la longueur d'onde du rayonnement utilisé et a est une dimension qui est caractéristique des particules contenues dans la région d'observation (MR).

6. Procédé selon l'une quelconque des revendications 1 à 3, dans lequel le faisceau de rayonnement (IB) est focalisé près de la région d'observation (MR).

7. Procédé selon la revendication 6, dans lequel la position de la région d'observation (MR) est choisie de façon à être à l'extérieur de la zone de Rayleigh (RZ) près de la position de plus petit diamètre du faisceau (IB).

8. Procédé selon l'une quelconque des revendications 1 à 3, dans lequel le rayonnement est focalisé au moyen d'une lentille cylindrique (2"') afin de former une mince lame de lumière (4"') qui éclaire la région d'observation (MR) substantiellement en une dimension.

9. Procédé selon l'une quelconque des revendications précédentes, dans lequel l'éclairage et la détection sont effectués depuis des côtés opposés de la région d'observation (MR).

10. Procédé selon l'une quelconque des revendications précédentes, prévu pour déterminer l'ordre fractionnaire au centre du système de franges d'interférence produit par une seule particule à la fois.

11. Procédé selon l'une quelconque des revendications précédentes, dans lequel la détection de la pluralité de valeurs d'intensités de rayonnement déterminées par l'interférence entre le rayonnement diffusé (SW) et le rayonnement transmis (TB) comprend une mesure de la variation des valeurs d'intensité dans le temps après le passage d'une particule (B) à travers le faisceau incident (IB),
la détermination des propriétés de la particule (B) étant basée sur la variation temporelle des franges qui sont touchées par le retard de phase.

12. Procédé selon la revendication 11, dans lequel la détermination des propriétés des particules (B) présuppose la détermination de la position de transit de la particule (B) à travers le faisceau incident (IB) par analyse de l'asymétrie du profil temporel des valeurs d'intensité mesurées.

13. Procédé selon la revendication 11, dans lequel la mesure du profil temporel des valeurs d'intensité mesurées se fait par sélection de la zone de transit des particules (B).

14. Procédé selon l'une quelconque des revendications 1 à 9, dans lequel la détermination des systèmes de franges d'interférence associés respectivement aux particules (B) comprend une détermination des centres (Cₖ) d'une pluralité de systèmes de franges d'interférence produits par une pluralité correspondante de particules (B).

15. Procédé selon la revendication 14, dans lequel la détermination des systèmes de franges d'interférence associés respectivement aux particules (B) comprend une détermination d'un spectre de puissance du champ électrique correspondant à la pluralité de valeurs d'intensité de rayonnement.

16. Procédé selon l'une quelconque des revendications précédentes, dans lequel la détermination des propriétés des particules (B) d'après les franges d'ordre inférieur du système de franges est programmée de façon à déterminer la distribution des dimensions des particules (B).

17. Dispositif prévu pour mettre en oeuvre un procédé de mesure selon la revendication 1, comprenant :
une source (1 ; 1"') du faisceau de rayonnement (IB), appropriée pour éclairer la région d'observation (MR),
un moyen formant capteur (3 ; 3"') approprié pour détecter le rayonnement simultanément en une pluralité de points et pour fournir un signal représentant cette détection, les capteurs étant disposés sur l'axe de propagation (z) de façon à détecter une pluralité de valeurs d'intensité de rayonnement qui sont déterminées par l'interférence entre le rayonnement diffusé (SW) et le rayonnement transmis (TB), où l'interférence subit l'influence d'un retard de phase du rayonnement diffusé (SW) par rapport au rayonnement transmis (TB), le retard étant déterminé par l'interaction du faisceau de rayonnement (IB) avec les particules (B), et
des moyens de traitement qui sont programmés pour déterminer, en se basant sur le signal, des systèmes de franges d'interférence associés respectivement aux particules individuelles (B), et pour déterminer les propriétés des particules (B) d'après les franges qui sont touchées par le retard de phase.

18. Dispositif selon la revendication 17, comprenant en outre un moyen formant lentille intercalé entre la région d'observation (MR) et le moyen formant capteur (3 ; 3"') afin de permettre une détection indirecte par détection de la pluralité de valeurs d'intensité dans un plan optiquement conjugué.

19. Dispositif selon la revendication 17 ou 18, comprenant en outre un système (2"') pour modeler le front d'onde, d'après une optique cylindrique afin de former une mince lame de rayonnement (4"') pour l'éclairage de la région d'observation (MR).

20. Dispositif selon la revendication 17 ou 18, comprenant en outre un système (2) pour modeler le front d'onde, approprié pour focaliser le rayonnement au voisinage de la région d'observation (MR).

21. Dispositif selon la revendication 17 ou 18, comprenant en outre un système pour modeler le front d'onde, approprié pour collimater le rayonnement qui arrive sur la région d'observation (MR).

22. Dispositif selon l'une quelconque des revendications 17 à 21, dans lequel le moyen formant capteur (3 ; 3"') comprend un capteur CCD, NMOS ou CMOS.

23. Dispositif selon l'une quelconque des revendications 17 à 21, dans lequel le moyen formant capteur (3 ; 3"') comprend une pluralité de photodiodes agencées de manière à détecter, en fonction du temps, la distribution d'intensité produite par l'interférence entre le rayonnement transmis (TB) et le rayonnement diffusé (SW).

24. Dispositif selon la revendication 23, dans lequel les photodiodes sont disposées de façon à collecter sélectivement le rayonnement provenant de zones de transit prédéterminées des particules (B).

25. Dispositif selon l'une quelconque des revendications 17 à 24, dans lequel la source (1 ; 1"') est une source multicolore.
